# EUROPEAN PATENT SPECIFICATION

(11) **EP 0 906 538 B1**
(45) Date of publication and mention of the grant of the patent: **17.05.2000**
(21) Application number: 97927015.4
(22) Date of filing: 18.06.1997
(51) Int. Cl.: F16L 59/14, B29C 63/06

(54) **A PROCESS FOR CONTINUOUS PREPARATION OF PIPE SECTIONS WITH FOIL**
VERFAHREN ZUR FORTLAUFENDEN VORBEREITUNG VON ROHRELEMENTEN MIT EINER VERBUNDFOLIE
PROCEDE DE PREPARATION CONTINUE DE SECTIONS DE CONDUIT COMPORTANT DU CLINQUANT

(30) Priority: 20.06.1996 DK 68696
(43) Date of publication of application: 07.04.1999
(73) Proprietor: Rockwool International A/S, 2640 Hedehusene (DK)
(72) Inventor: POULSEN, Steen, Block, DK-2670 Greve (DK); CRIDLAND, Ian, DK-2720 Vanlose (DK); RASMUSSEN, Gorm, DK-4200 Slagelse (DK)
(74) Representative: Halberg, Kristian
(86) International application number: DK9700264
(87) International publication number: WO9748942

(56) References cited:
- DE-A- 2 724 147
- DE-A- 3 536 086
- DK-B- 157 098
- NO-B- 123 688
- SE-B- 358 226
- SE-B- 409 186
- SE-B- 452 497
- US-A- 3 813 272
- US-A- 4 584 217
- US-A- 5 069 969

## Description

The present invention relates to a process for the preparation of a shaped member being slitted in the longitudinal direction and having a foil covering on its outer side, wherein an elongated, cylindrical, slitted shaped member with an axial, cylindrical cavity is provided with a similarly slitted covering of foil on the cylindrical outer surface.

A pipe section typically consists of an elongated, cylindrical shaped member with an annular cavity being concentric with the longitudinal axis. Thus, a pipe section forms a hollow cylinder which usually is provided with a slit. By opening the slit, the pipe section can be mounted sideways on a pipe and subsequently be closed so as to form a casing around the pipe. The slit may optionally be closed with tape or the like. Pipe sections are available with varying diameters and in shortenable, combinable lengths which can be adapted to the actual need.

Generally, pipe sections are used for insulating pipings, e.g. for reasons of energy economy, fire safety and noise, and are thus often made from the known insulation materials, such as foamable synthetic material or mineral fibre. As a result, such pipe sections are typically soft or porous at the surface, and mineral fibre pipe sections in particular exhibit a coarse and uneven surface.

For a number of reasons it may be expedient to cover pipe sections with a foil. This may e.g. be done in order to improve the insulating property, in order to safeguard against penetrating moisture, or for reasons of aesthetics or handling.

It is known from the patent literature to cover pipe sections with a foil by wrapping the pipe sections peripherally and individually.

DE 27 24 147 C2 discloses a process for the preparation of pipe sections covered with metal foil, wherein a slitted pipe section, preferably of mineral fibres, is covered peripherally with a sheet of metal foil which is rolled onto the pipe section from one slit edge to the other, the metal foil in the zones along and immediately adjacent to the slit edges of the pipe section being provided with adhesive, and the foil having a excess portion which extends beyond the slit, which excess portion is coated with adhesive.

Such a method for peripheral covering of pipe sections with a foil is slow and complicated. Before the rolling-on is started, the pipe section must be positioned and oriented with one slit edge over the front edge of the foil sheet. The rolling-on necessarily entails that the pipe section acts properly as shaping instrument towards the foil. The tensioning of the foil around the pipe section causes peripheral stresses in the foil, which tension it around the pipe section, which is undesirable in connection with mineral fibre pipe sections, as the unevennesses in the surface of the pipe section can be fully reflected in the form of unevennesses in the foil. The width of the foil sheet must furthermore match the length of the pipe section, which makes the method less expedient in production lines for the preparation of pipe sections with varying lengths, or optionally in endless form.

From the patent literature methods are also known for continuous covering of endless cylindrical members with another material.

US-A-3 259 533 discloses a method and an apparatus for wrapping a pipe being advanced in insulation material. According to the method, a pipe is advanced axially and covered with sheet of insulation material in the longitudinal direction. The insulation material is pressed against the pipe by passage through a funnel-shaped shaping tool, and subsequently it is wound with threads for retaining the sheet formed insulation material to the pipe. The said specification also describes the possibility of spraying a plastic material on the assembly so as to obtain a plastic coating.

DE 1 924 971 C2 discloses a method for continuous preparation and positioning of a covering on an endless pipe. The pipe is advanced axially, and is provided with a layer of insulation material. By means of a shaping tool, a tubular covering is subsequently formed from a plane foil around the insulation layer. The tubular foil covering is welded together by means of a welding device.

None of these specifications mentions covering of pipe sections, or similar cylindrical members provided with a slit. Generally, the said continuous methods are unsuited for covering pipe sections, which are provided with a slit, with a foil, since as a result of such complete wrapping the slit of the pipe section will be covered. Furthermore, such methods of wrapping cylindrical bodies with a foil cannot directly be used with satisfactory result on pipe sections with porous, uneven or soft surface. Thus, if such a pipe section is used as support for the foil in the shaping process, wrinkles, bulges, cracks or holes will be formed in the foil, which impair the properties which the foil is to provide, whether it is a matter of an improvement relating to insulation, aesthetics or handling. On the other hand it is desired that the foil be fixed to the surface of the pipe section for which reason it must be brought into contact herewith.

It is the object of the invention to provide a process of the kind stated in the introductory portion of claim 1, wherein, in a simple manner, a pipe section with a smooth and uniform foil covering can be formed, and wherein, as it is, the abovementioned disadvantages of the prior art can be avoided.

This object is achieved by the process according to the invention which is characterized in that a preformed shaped member is advanced axially as an endless string in a production line, that an endless web of plane foil is advanced to the same production line, that by using shaping tools, the foil is shaped to an approximately tubular shape with a longitudinally extending slit and surrounding the shaped member, that the tubular diameter of the foil is gradually reduced while maintaining the axial tension until the foil is in contact with the outer side of the shaped member, and that the foil is surface adhered to the shaped member.

The invention is based on the discovery that by imparting tubular shape to the plane foil without using the shaped member as shaping instrument, by using discrete, dimensionally stable shaping tools, and by subsequently bringing the foil with the thus formed tubular shape into contact with the shaping tool, it is possible to avoid formation of wrinkles, bulges, cracks or holes in the foil.

By forming the foil to a tubular shape using discrete shaping tools, it is thus avoided that the foil is pressed against the shaping tool during the shaping. Hereby shaped members of soft and porous materials can be covered with a foil without the shaped member getting deformed. Further, any unevennesses on the surface of the shaped member have insignificant influence on the appearance of the foil, just as friction, due to offsetting between pipe section and foil in the shaping process, essentially can be avoided, and the resulting damages be minimized.

Since the shaped member essentially does not serve as support in the shaping process, the orientation of the slit of the shaped member and the positioning of the foil around the shaped member can be controlled independently. Since both parts are advanced axially and without rotation or lateral offsetting in the process according to the invention, the foil can with high precision be made to abut on the edge of the slit.

In a preferred embodiment of the process according to the invention, the orientation of the slit of the shaped member is controlled - by using control means. Hereby the advantage is achieved that the foil can be made essentially to surround the shaped member from one slit edge to the other. The control means may comprise means which engage with the slit of the shaped member.

In another preferred embodiment of the process according to the invention, the plane foil is shaped to tubular shape in an initial step by passing through an annular shaping tool.

In yet a preferred embodiment of the method according to the invention, the plane foil is shaped to tubular shape in an initial step by passing on the outer side of an annular shaping tool.

The initial shaping of the foil to approximately tubular shape may either be performed by letting the foil pass through a dimensionally stable shaping tool having an approximately circular hole, or by letting the foil be shaped around a dimensionally stable, approximately circular shaping tool, or by using a combination of such shaping tools.

The reduction of the tubular diameter of the foil is preferably performed by letting the foil pass through another dimensionally stable shaping tool having a circular hole, the diameter of which hole is of a size which allows passage of the shaped member and the foil in such a way that they are precisely brought into contact with each other. The foil may also or alternatively be brought into immediate contact with the shaped member or gently be held against the member by means of brushes or bristles.

In another preferred embodiment of the process according to the invention, the foil is retained in position in relation to one or more of the shaping tools in that they are provided with means for generating an overpressure or underpressure between shaping tool and foil.

Overpressure and underpressure can be used for controlling the foil in relation to the shaping tools. In connection with the shaping, it can thus be ensured that the foil is kept free of contact with the shaped member prior to the fixation thereon.

In yet a preferred embodiment of the process according to the invention, one or more of the shaping tools are provided with a low-friction surface on the surface facing the foil. Such a low-friction surface may e.g. be in the form of a coating of polytetrafluoroethylene (PTFE) or certain types of metals, e.g. steel with vanadium carbides inserted on the surface according to the TDP-process (Toyota Diffusion Process).

A friction-reducing coating on the shaping tools can be used to cause the friction between shaping tools and foil to be reduced, and in order thereby to avoid an unintended heating of the foil and/or the shaping tools.

In order to provide the durable adhesion between the shaped member and the foil, use may be made of an adhesive. The adhesive may e.g. be applied onto the foil or the shaped member prior to the covering, or the adhesive may be applied as a step in the process.

In a further preferred embodiment of the process according to the invention, a foil and/or a shaped member comprising a zone with a layer of adhesive, a layer of hot melt, or a weldable zone, are used.

In yet a preferred embodiment of the process according to the invention, the weldable zone or hot melt is activated by means provided with a heat source in order to provide interfixation between foil and shaped member. The heat may be supplied by means of hot air, infrared radiation, induction, a burner, and/or any other suitable means for supplying or inducing heat.

During the heating step and/or until the interfixation is completed, the foil may be gently held against the shaped member by means of brushes or bristles.

In another preferred embodiment of the process according to the invention, the foil and/or the shaped member are applied with a layer of adhesive prior to being brought into contact with each other in order to provide an interfixation.

In a particularly preferred embodiment of the process according to the invention, use is made of a foil having a width which is larger than the circumference of the shaped member for covering thereof, and the foil is positioned in such a way that the excess portion extends outwardly from one of the slit edges in relation to the axis of the shaped member.

By using a foil having a width which is larger than the circumference of the shaped member in accordance with the process according to the invention, it is further possible to achieve the advantage that the excess foil portion may serve as an efficient closing mechanism for sealing the shaped member after mounting thereof. Thus, not only an improved insulating property, but also a better finish are ensured.

In another particularly preferred embodiment of the process according to the invention, the excess foil portion has been or is provided with a layer of adhesive. The adhesive layer may e.g. be a layer of double-adhesive tape.

In yet a particularly preferred embodiment of the process according to the invention, the adhesive layer of the excess foil portion has been or is provided with a strippable cover, e.g. in the form of silicone paper.

In a further particularly preferred embodiment of the process according to the invention, the foil is advanced by a pull in the excess portion of the foil by using advancing means, such as rolls or friction bands.

The foil covered pipe section may advantageously also be conveyed or guided by means of conveying bands and/or rolls placed on each opposite side of the pipe section at the point where the foil is advanced by a pull in the excess portion of the foil. The foil covered pipe section may at this point be unsupported underneath, and merely be held in place by the advancing and/or guiding means.

In another particularly preferred embodiment of the process according to the invention, the direction of pull of the advancing means can be angular in relation to the axial direction of movement of the shaped member.

In this way, the extension of the foil flap, preferably constituted by the excess portion of the foil, can be regulated up or down depending upon whether the direction of pull has an upwardly or downwardly directed angle in relation to the axial direction of advance of the shaped member. Hereby the advantage is additionally achieved that the peripheral position of the foil in relation to the shaped member can be adjusted.

In yet a particularly preferred embodiment of the process according to the invention, the shaped member is covered with a foil having a layer of metal, preferably aluminium.

Foils comprising a layer of metal, or foils essentially made of metal, exhibit better fire protection property than e.g. polymeric materials. Consequently, these foils are particularly suitable for covering shaped members which are to be mounted on pipes in surroundings in which there is or may be risk of fire. The said foils are typically more rigid than e.g. polymeric foils, and furthermore particularly sensitive to deformation due to bending, twisting, or other impact. Consequently, it is in particular an advantage of the process according to the invention that such foils can be shaped essentially without the shaped member as support.

The invention also relates to the pipe sections covered with foil which are obtained by cutting off final lengths of the endless string of pipe sections prepared by the process according to the invention.

As used herein, a slitted shaped member essentially means a non-covered, tubular member consisting of an insulation material and being provided with a single slit for sideways mounting on a pipe. However, covering of shaped members composed of two semi-cylinders, e.g. as disclosed in WO97/01006 Rockwool International, is also within the scope of the present invention, just as the process according to the invention can be used on whole pipes which are slitted simultaneously with the covering, or optionally in a later step.

As used herein, the expression pipe section essentially comprises cut-off lengths of shaped members of insulation material with or without a foil covering.

Pipe sections, which advantageously may be covered with a foil in accordance with the process according to the invention, can be made of any material suitable for preparation of prefabricated pipe sections. In particular, the advantages according to the invention are achieved by using pipe sections which are made of man-made mineral fibres, e.g. glass, rock and/or slag fibres, such as those which are used in plates, sheets, pipes and differently shaped products for thermal insulation, fire retarding purposes, noise damping, or noise regulation, or for fibre reinforcement of cement and plastic materials or other materials, or as filler, or as growth medium for plants.

Mineral fibre pipe sections provided with a metal foil are particularly suitable for use in environments in which there is or may be risk of fire. Consequently, it is particularly attractive by the process according to the invention that these products can be prepared without the problems mentioned in the preamble.

The pipe sections according to the invention are suitable for insulating both cold and hot pipes.

As used herein, the expression adhesive comprises adhesives and adhesive components in the form of acrylic glue, water based glue, close contact glue, two-pack glue, and any other glue, adhesive or tape which is capable of providing the desired interfixation between pipe section and foil.

As used herein, the term weldable zone relates to a zone consisting of thermoplastic polymeric material or the like, where this material, by using a heat source, temporarily can be brought into molten state, in which it can adhere to a body, and in which, following cooling, it again undergoes transition to solid form while still adhering to the body. A weldable zone may e.g. consist of a layer of polyethylene.

In the following the invention will be described in more detail, reference being made to the drawing, in which
- Fig. 1.: shows a side view of a production line for carrying out the process according to the invention,
- Fig. 2.: shows a section along the line A-A in Fig. 1 for illustrating shaped member and foil prior to covering,
- Fig. 3.: shows a section along the line B-B in fig. 1 for illustrating shaped member and foil during passage through a shaping tool.
- Fig. 4.: shows a section along the line C-C in Fig. 1 for illustrating shaped member and foil during passage through means with heat source,
- Fig. 5.: shows a section along the line D-D in Fig. 1 for illustrating a covered shaped member and advancing means for foil and shaped member.

All figures are schematic and not dimensional, and only show components which are essential for understanding the invention, whereas further details have been left out for reasons of clarity.

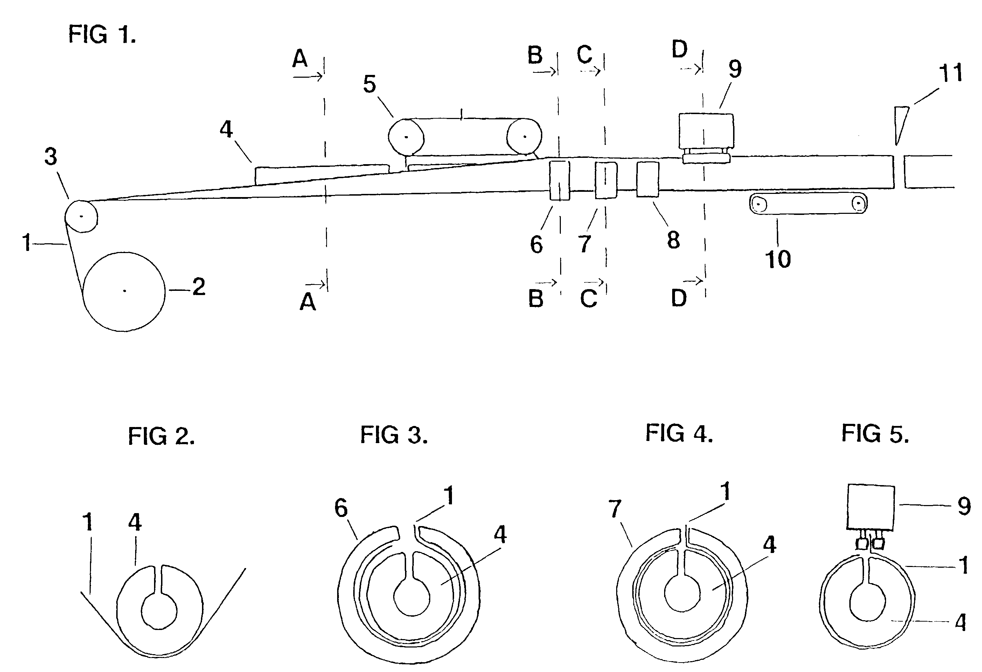

From Fig. 1 it is seen how a plane foil 1 with laminated welding layer is pulled by a supply roll 2 over a control roller 3, and how individual non-covered pipe sections in the form of shaped members 4 consisting of insulation material are positioned axially end-to-end on top of the foil web or optionally on a chute not shown in any detail, and are advanced by advancing means 5 comprising a chain with generatrices. The shaped members 4 being positioned axially end-to-end are hereby advanced in close succession so as to essentially appear as an endless string.

The foil web is gradually shaped from linear cross-section (not shown) via the roll 3, over an open U-shape, as shown in Fig. 2, over the approximately tubular shape, as shown in Fig. 3, to tubular shape in immediate contact with the outer surface of the shaped member, as shown in Fig. 4.

The shaping tool 6 (see Fig. 3) is provided with a slit through which the excess portion of the foil extends. From here the foil passes through a shaping tool with a heat source 7, (see Fig. 4), which brings the foil into immediate contact with the outer surface of the shaped member and activates the welding layer of the foil. From here the shaped member and the foil are passed through a cooling device 8, which ensures rapid curing of the welding layer so as to provide durable bonding of the foil to the outer surface of the shaped member.

The foil is advanced while being stretched by a pull in the excess portion by using advancing means 9, (see fig. 5), comprising two movable, endless friction bands which squeeze around the excess portion of the foil, and by advancing the foremost end using the drive means 10 which comprises two movable endless friction bands which support the endless string of foil covered shaped members.

The endless string may be divided into final lengths of pipe sections by using the cutting device 11. The tensioning of the foil may optionally be regulated by decelerating the roll 2, just as harmonization of the rate of the advancing means 5 and 9 and the drive means 10 can be controlled by means of not shown control units.

## Claims

1. A process for the preparation of a shaped member being slitted in the longitudinal direction and having a foil covering on its outer side, wherein an elongated, cylindrical, slitted shaped member having an axial, cylindrical cavity is provided with a similarly slitted covering of foil on the cylindrical outer surface, **characterized** in that a preformed shaped member is advanced axially as an endless string in a production line, that an endless web of plane foil is advanced to the same production line, that by using shaping tools, the foil is shaped to approximately tubular shape with a longitudinally extending slit and surrounding the shaped member, that the tubular diameter of the foil is gradually reduced while maintaining the axial tension until the foil is in contact with the outer side of the shaped member, and that the foil is surface adhered to the shaped member.

2. A process according to claim 1, **characterized** in that the orientation of the slit of the shaped member is controlled by using control means.

3. A process according to claims 1-2, **characterized** in that the plane foil is shaped to tubular shape in an initial step by passing through an annular shaping tool.

4. A process according to claims 1-2, **characterized** in that the plane foil is shaped to tubular shape in an initial step by passing on the outer side of an annular shaping tool.

5. A process according to any of the preceding claims, **characterized** in that the foil is retained in shape by means of one or more shaping tools provided with means for generating an overpressure or underpressure between shaping tool and foil.

6. A process according to claims 1-4, **characterized** in that that the foil is retained in shape by means of one or more shaping tools provided with a low-friction surface on the surface facing the foil.

7. A process according to any or the preceding claims, **characterized** in that the foil and/or the shaped member are applied with a layer of adhesive prior to being brought into contact with each other in order to provide an interfixation.

8. A process according to any of the preceding claims, **characterized** by using a foil which in advance comprises a zone with a layer of adhesive, a layer of hot melt, or a weldable zone, for covering the shaped member.

9. A process according to claim 8, **characterized** in that the hot melt or weldable zone of the foil is activated by means provided with a heat source in order to provide an interfixation between foil and shaped member.

10. A process according to any of the preceding claims, **characterized** by using a foil having a width which is larger than the circumference of the shaped member, where the excess portion of the foil extends outwardly in relation to the axis of the shaped member.

11. A process according to claim 10, **characterized** in that the excess foil portion is provided or has been provided with a layer of adhesive.

12. A process according to claim 11, **characterized** in that the adhesive layer of the excess foil portion is provided or has been provided with a strippable cover, e.g. in the form of silicone paper.

13. A process according to claim 10, 11 or 12, **characterized** in that the foil is advanced by a pull in the excess portion of the foil by using advancing means, such as rolls or friction bands.

14. A process according to claim 13, **characterized** in that the direction of pull of the advancing means can be angular in relation to the direction of movement of the shaped member.

15. A process according to any of the preceding claims, **characterized** in that the foil selected is a foil comprising a layer of metal, preferably aluminium.

## Patentansprüche

1. Verfahren zur Herstellung eines in Längsrichtung geschlitzten Formteils, das eine seine Außenseite bedeckende Folie aufweist, wobei ein längliches, zylindrisches, geschlitztes Formteil, das einen axialen, zylindrischen Hohlraum hat, auf seiner zylindrischen Außenfläche mit einer ähnlich geschlitzten Folienabdeckung versehen wird, dadurch **gekennzeichnet**, daß ein vorgeformtes Formteil in einer Produktionslinie als endloser Strang axial zugeführt wird, daß eine endlose Bahn einer ebenen Folie in der gleichen Prduktionslinie zugeführt wird, daß durch Verwendung von Formgebungswerkzeugen die Folie in eine das Formteil umgebende näherungsweise rohrförmige Form mit einem sich in Längsrichtung erstreckenden Schlitz gebracht wird, daß der Rohrdurchmesser der Folie zunehmend verringert wird, während die Axialspannung beibehalten wird, bis die Folie mit der Außenseite des Formteils in Berührung gelangt, und daß die Folie mit dem Formteil flächig verbunden wird.

2. Verfahren nach Anspruch 1, dadurch **gekennzeichnet**, daß die Orientierung des Schlitzes des Formteils mit einer Steuereinrichtung gesteuert wird.

3. Verfahren nach Anspruch 1 oder 2, dadurch **gekennzeichnet**, daß die ebene Folie in einem anfänglichen Schritt in eine rohrförmige Form gebracht wird, indem sie durch ein ringförmiges Formgebungswerkzeug geleitet wird.

4. Verfahren nach Anspruch 1 oder 2 dadurch **gekennzeichnet**, daß die ebene Folie in einem anfänglichen Schritt in eine rohrförmige Form gebracht wird, indem sie auf die Außenseite eines ringförmigen Formgebungswerkzeugs geleitet wird.

5. Verfahren nach einem der vorhergehenden Ansprüche, dadurch **gekennzeichnet**, daß die Folie mit einem oder mehreren Formgebungswerkzeugen in Form gehalten wird, die mit Mitteln versehen sind, um einen Über- oder Unterdruck zwischen dem Formgebungswerkzeug und der Folie zu erzeugen.

6. Verfahren nach Anspruch 1 bis 4, dadurch **gekennzeichnet**, daß die Folie mit einem oder mehreren Formgebungswerkzeugen in Form gehalten wird, die auf ihrer der Folie zugekehrten Seite mit einer reibungsarmen Oberfläche versehen sind.

7. Verfahren nach einem der vorhergehenden Ansprüche, dadurch **gekennzeichnet**, daß die Folie und/oder das Formteil mit einer Klebstoffschicht versehen werden, bevor sie miteinander in Berührung gebracht werden, um eine Verbindung zu schaffen.

8. Verfahren nach einem der vorhergehenden Ansprüche, **gekennzeichnet** durch Verwendung einer Folie, die von vornherein eine Zone mit einer Schicht aus Klebstoff, eine Schicht eines Heißklebers oder eine schweißbare Zone zum Bedecken des Formteils aufweist.

9. Verfahren nach Anspruch 8, dadurch **gekennzeichnet,** daß die heißverklebbare oder verschweißbare Zone der Folie mit einer Einrichtung aktiviert wird, die mit einer Wärmequelle versehen ist, um eine Verbindung zwischen der Folie und dem Formteil zu schaffen.

10. Verfahren nach einem der vorhergehenden Ansprüche, **gekennzeichnet** durch die Verwendung einer Folie, deren Breite größer ist als der Umfang des Formteils, wobei sich der überschüssige Bereich der Folie in Bezug auf die Achse des Formteils nach außen erstreckt.

11. Verfahren nach Anspruch 10, dadurch **gekennzeichnet**, daß der überschüssige Bereich der Folie mit einer Klebstoffschicht versehen wird oder versehen wurde.

12. Verfahren nach Anspruch 11, dadurch **gekennzeichnet**, daß die Klebstoffschicht des überschüssigen Bereichs der Folie mit einer abziehbaren Abdeckung, beispielsweise in Form eines Silikonpapiers versehen wird oder versehen wurde.

13. Verfahren nach Anspruch 10, 11 oder 12, dadurch **gekennzeichnet,** daß die Folie mittels einer Vorschubeinrichtung, wie z. B. Walzen oder Reibbänder, durch eine Zugkraft in dem überschüssigen Bereich vorwärts bewegt wird.

14. Verfahren nach Anspruch 13, dadurch **gekennzeichnet**, daß die Richtung der Zugkraft der Vorschubeinrichtung in bezug auf die Bewegungsrichtung des Formteils schräg sein kann.

15. Verfahren nach einem der vorhergehenden Ansprüche, dadurch **gekennzeichnet**, daß die ausgewählte Folie eine Schicht aus Metall, vorzugsweise Aluminium aufweist.

## Revendications

1. Procédé de préparation d'un élément profilé fendu dans la direction longitudinale et ayant un habillage en feuille sur son côté extérieur, dans lequel un élément profilé allongé, cylindrique fendu ayant une cavité cylindrique axiale est muni d'un habillage fendu de manière similaire en feuille sur la surface extérieure cylindrique, caractérisé en ce qu'un élément profilé préformé est avancé axialement en tant que cordon sans fin dans une ligne de production, en ce qu'une bande sans fin de feuille plane est avancée vers la même ligne de production, en ce que, en utilisant des outils de profilage, la feuille est profilée pour présenter une forme sensiblement tubulaire avec une fente s'étendant longitudinalement et entourant l'élément profilé, en ce que le diamètre tubulaire de la feuille est réduit progressivement tout en maintenant la tension axiale jusqu'à ce que la feuille soit en contact avec le côté extérieur de l'élément profilé, et en ce que la feuille est amenée à adhérer en surface à l'élément profilé.

2. Procédé selon la revendication 1, caractérisé en que l'orientation de la fente de l'élément profilé est commandée en utilisant des moyens de commande.

3. Procédé selon les revendications 1 et 2, caractérisé en ce que la feuille plane est profilée pour présenter une forme tubulaire dans une étape initiale en passant à travers un outil de profilage annulaire.

4. Procédé selon les revendications 1 et 2, caractérisé en ce que la feuille plane est profilée pour présenter une forme tubulaire dans une étape initiale en passant sur le côté extérieur d'un outil de profilage annulaire.

5. Procédé selon l'une quelconque des revendications précédentes, caractérisé en ce que la feuille voit sa forme maintenue à l'aide d'un ou plusieurs outils de profilage munis de moyens destinés à générer une surpression ou une dépression entre l'outil de profilage et la feuille.

6. Procédé selon les revendications 1 à 4, caractérisé en ce que la feuille voit sa forme maintenue à l'aide d'un ou plusieurs outils de profilage munis d'une surface à faible frottement sur la surface faisant face à la feuille.

7. Procédé selon l'une quelconque des revendications précédentes, caractérisé en ce que la feuille et/ou l'élément profilé sont revêtus d'une couche d'adhésif avant d'être mis en contact l'un avec l'autre pour générer une fixation mutuelle.

8. Procédé selon l'une quelconque des revendications précédentes, caractérisé par l'utilisation d'une feuille qui, à l'avance, comprend une zone avec une couche d'adhésif, une couche de colle thermofusible, ou une zone soudable, pour recouvrir l'élément profilé.

9. Procédé selon la revendication 8, caractérisé en ce que la colle thermofusible ou la zone soudable de la feuille est activée à l'aide de moyens munis d'une source de chaleur pour générer une fixation mutuelle entre la feuille et l'élément profilé.

10. Procédé selon l'une quelconque des revendications précédentes, caractérisé en ce qu'on utilise une feuille ayant une largeur plus grande que la circonférence de l'élément profilé, la partie excédentaire de la feuille s'étendant vers l'extérieur par rapport à l'axe de l'élément profilé.

11. Procédé selon la revendication 10, caractérisé en ce que la partie de feuille excédentaire est munie ou a été munie d'une couche d'adhésif.

12. Procédé selon la revendication 11, caractérisé en ce que la couche adhésive de la partie de feuille excédentaire est munie ou a été munie d'un habillage détachable, par exemple sous la forme d'un papier silicone.

13. Procédé selon la revendication 10, 11 ou 12, caractérisé en ce que la feuille est avancée par une force de traction dans la partie excédentaire de la feuille en utilisant des moyens d'avancée, tels que des rouleaux ou des bandes de frottement.

14. Procédé selon la revendication 13, caractérisé en ce que la direction de traction des moyens d'avancée peut être angulaire par rapport à la direction de déplacement de l'élément profilé.

15. Procédé selon l'une quelconque des revendications précédentes, caractérisé en ce que la feuille choisie est une feuille comprenant une couche de métal, de préférence de l'aluminium.
